# EUROPEAN PATENT SPECIFICATION

(11) **EP 0 318 298 B1**
(45) Date of publication and mention of the grant of the patent: **12.01.1994**
(21) Application number: 88311153.6
(22) Date of filing: 24.11.1988
(51) Int. Cl.: G11B 27/02, H04N 5/265

(54) **Dual video recording/reproducing apparatus**
Duales Video-Aufzeichnungs-/Wiedergabegerät
Appareil doublé d'enregistrement/de reproduction de signaux vidéo

(30) Priority: 26.11.1987 JP 298604/87
(43) Date of publication of application: 31.05.1989
(73) Proprietor: SONY CORPORATION, Tokyo 141 (JP)
(72) Inventor: Hiratsuka, Masaru, 6-7-35 Kitashinagawa Shinagawa-ku Tokyo (JP); Nakashima, Hitoshi, 6-7-35 Kitashinagawa Shinagawa-ku Tokyo (JP); Nakagawa, Kiyoshi, 6-7-35 Kitashinagawa Shinagawa-ku Tokyo (JP); Fukushima., Shinya, 6-7-35 Kitashinagawa Shinagawa-ku Tokyo (JP)
(74) Representative: Pilch, Adam John Michael

(56) References cited:
- EP-A- 0 291 934
- DD-A- 249 365
- US-A- 4 272 790
- US-A- 4 365 313
- US-A- 4 377 824

## Description

This invention relates to dual video recording/reproducing apparatus which may be used as video tape editing apparatus.

Video editing apparatus is known wherein video signals derived from one source are combined with video signals derived from another source, the combined video signals being suitably stored for subsequent playback and display, such as on an edited video tape. Typically, video as well as audio signals recorded on one tape which, for convenience herein, is designated the source or original tape, are played back and then re-recorded on a target tape, which is referred to herein as an edit tape. Thus, programme material from different programme sources may be combined, in selected segments and in a desired sequence, on a single video tape to form an edited programme. Such editing is common in television programming, television journalism, and the like.

When carrying out an editing operation with known apparatus such as that disclosed in US-A- 4365313, separated video displays or monitors are used to display video pictures played back from the original and edit tapes. Such displays enable the operator to determine the particular portions or segments which he wishes to transfer from the original tape to the edit tape; and also to identify the location on the edit tape at which such transferred segments should be recorded. Thus, the separate monitors are helpful in searching the original and edit tapes, respectively, to find the proper materials for editing.

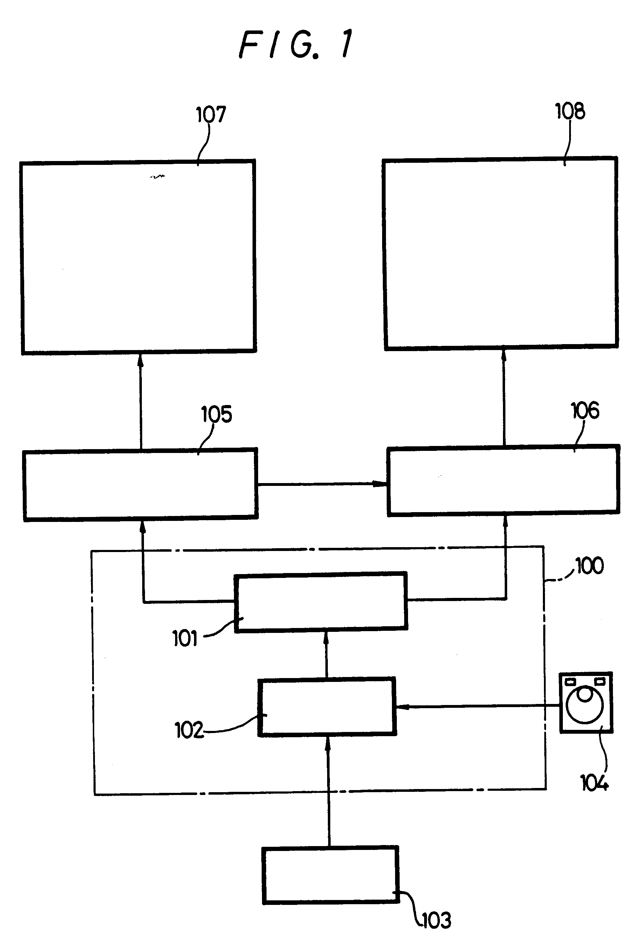

A typical example of editing apparatus using two monitors for the aforementioned purpose is illustrated in Figure 1 of the accompanying drawings. As shown, video editing apparatus 100 includes an edit circuit 101 which responds to control signals supplied thereto from a control circuit 102 to control the operations of a video tape player 105 and a video record/playback device (referred to simply as a video recorder) 106. A keyboard 103 and a so-called jog dial 104 are manually operated by an operator to select the various video playback and video recording operations that are controlled by the edit circuit 101. A first monitor 107, acting as an original picture monitor, is coupled to the video player 105 to display video pictures corresponding to the video signals reproduced by the video player. Similarly, a second monitor 108, acting as an edit picture monitor, is coupled to the video recorder 106 to display the video pictures corresponding to the video signals which are reproduced by a playback operation carried out by the video recorder.

To carry out a typical editing operation, the keyboard 103 and the jog dial 104 are operated by the operator such that the video player 105 reproduces video signals from the original tape for display as a picture by the first monitor 107. The operator views the displayed video picture until a desired picture is reached. The jog dial 104 may be operated to advance the original tape slowly, on a frame-by-frame basis, to facilitate the operator's search for a desired segment on the original tape. When the desired segment is reached, as will be observed by the picture displayed on the first monitor 107, the keyboard 103 is operated to establish a pause mode for the video player 105. Then, during the video player pause mode, and while the desired video picture is displayed on the first monitor 107, the keyboard 103 is operated such that the video recorder 106 is controlled to play back the video signals recorded on the edit tape. The edit tape playback operation is similar to the original tape playback operation, and the video signals reproduced from the edit tape are displayed by the second monitor 108. When the operator observes a desired picture on the second monitor 108 at which the video signals from the original tape are to be transferred, the keyboard 103 is operated to dispose the video recorder 106 in its pause mode. Here too, the jog dial 104 may be operated to advance the edit tape on a frame-by-frame basis to facilitate the precise location of that portion of the edit tape whereafter the original tape video signals are to be transferred.

At this stage of the editing operation, the first or original picture monitor 107 displays the beginning of the video segment to be transferred from the original tape to the edit tape, and the second or edit picture monitor 108 displays the starting point on the edit tape at which point the transferred video signals are to be inserted. Then, upon suitable operation of the keyboard 103, video signals reproduced from the video player 105 are transferred to and recorded on the edit tape by the video recorder 106.

The video editing apparatus 100 may also be operated such that the beginning and end of each segment to be transferred from the original tape to the edit tape is identified. For example, while observing the video picture reproduced from the original tape, the operator may actuate suitable control keys to mark the beginning and ending locations on the original tape of the segment to be transferred. When the marked ending location is reached, the transfer operation terminates.

As a further alternative, the transfer operation of video signals from the original tape to the edit tape may continue until a stop edit key is actuated.

When using programmable editing apparatus, several segments on the original tape may be identified by their respective beginning and ending locations, as aforementioned. Once all of these segments have been found and designated, the transfer operation from the original tape to the edit tape may be carried out automatically and by remote control.

Video editing apparatus of the type illustrated in Figure 1 and having the various operating capabilities discussed above heretofore has required the use of two separate monitors. This not only adds to the cost of the apparatus but presents significant space requirements to accommodate two display devices. Also, when observing two separate monitors, the operator may find a complicated editing operation to be quite difficult and tiring.

Recently, video equipment has been proposed in which two separate video pictures are displayed concurrently on a single display screen. Such a picture-in-picture display would be useful in video editing apparatus. A video picture derived from an original tape and a video picture derived from an edit tape could be displayed simultaneously on such video equipment. One of these pictures would be displayed on a so-called main picture and the other would be displayed as a reduced size inserted sub-picture. However, by reason of its reduced size, it may be difficult to observe the inserted sub-picture adequately. Particular details which may be important in an editing operation, such as details needed to identify a desired video segment to be edited, might not be adequately discerned. For example, if the video picture derived from the edit tape were to be displayed as the sub-picture insert, it may be difficult for the operator to select the proper location on the edit tape at which video signals from the original tape should be transferred.

If the main picture displayed by the aforementioned video equipment could be derived from either the original tape or the edit tape, an operator may find it difficult to remember whether the main picture is derived from the original tape and the sub-picture insert is derived from the edit tape, or vice versa. Since the sub-picture generally is inserted at the very same location in the main picture regardless of the particular tape from which that sub-picture is derived, there is a strong possibility that, after several hours of editing, the operator may not recall what is represented by the main picture and what by the sub-picture. Consequently, errors in the editing operation may be produced, and the operation itself would be time-consuming and labour intensive.

According to the invention there is provided dual video recording/reproducing apparatus comprising:
a video playback unit;
a video recording unit including recording means for recording a video signal and reproducing means for reproducing a video signal;
supply means for supplying an output video signal from said video playback unit to the recording means of said video recording unit;
sub-picture signal forming means responsive to a video signal supplied thereto for providing a sub-picture signal operable to cause the display of a sub-picture insert of a main picture displayed on a video display;
switch means for receiving a video signal from said video playback unit and a video signal from the reproducing means of said video recording unit and selectively operative to couple one of said video signals to said sub-picture signal forming means and to couple the other of said video signals as a main picture signal;
combining means for combining said sub-picture and main picture signals to form a display signal for displaying a main picture and a sub-picture insert;
control means for controlling the operation of said switch means; and
a housing for containing the sub-picture signal forming means, the switch means, the combining means and the control means.

A preferred embodiment of this invention, to be described in greater detail hereinafter, provides a dual video recording/reproducing apparatus used with a single video monitor for displaying a main picture and a sub-picture providing information that can be readily discerned and identified by an operator.

In the preferred embodiment, a main picture may be derived from either an original tape or an edit tape, and the sub-picture may be derived from the other tape; the particular location of the sub-picture in the main picture identifies the source thereof.

Preferably, the source of the displayed main picture and the source of the displayed sub-picture may be easily and simply exchanged under operator control, as may be desired.

In a preferred video editing apparatus, a single, common display monitor is provided, and the editing equipment is installed in a single housing, thereby minimising space requirements for the editing apparatus while simplifying overall control over the editing operation.

In accordance with the preferred embodiment of this invention, the sub-picture signal forming means comprises an analog-to-digital converter for receiving the video signal from the video playback unit or from the video recording unit, a memory for storing the digitised video signal produced by the analog-to-digital converter, a digital-to-analog converter to convert the stored, digitised video signal to analog form, and a memory control for controlling at least the reading of the digital signals from the memory. As one aspect of this embodiment, the memory controller may operate to control the time at which the digital signals are read from the memory, thereby determining the location in the main picture at which the sub-picture is inserted. By delaying the time at which the stored digital signals are read from the memory, the particular location of the sub-picture insert in the main picture is changed.

As yet another aspect of this embodiment, the memory controller may operate to control the writing of only selected digital signals from the analog-to-digital converter to the memory so as to reduce the size of the sub-picture relative to the main picture.

The memory of the sub-picture forming means may store a frame of the digitised video signals produced by the analog-to-digital converter, and the output of the digital-to-analog converter may be recorded repetitively, as on a video tape, such that when this signal is reproduced from the video tape, a still picture is displayed.

The invention will now be described by way of example with reference to the accompanying drawings, throughout which like parts are referred to by like references, and in which:
Figure 1 is a block diagram representing a previously-proposed video editing system;
Figure 2 is a perspective view of a video editor and monitor according to a preferred embodiment of the present invention;
Figure 3 is a plan view of the keyboard illustrated in Figure 2;
Figures 4a and 4B together comprise a block diagram of the preferred embodiment of the present invention; and
Figure 5 is a timing diagram useful in understanding how an editing operation is carried out by the apparatus shown in Figures 2 to 4B.

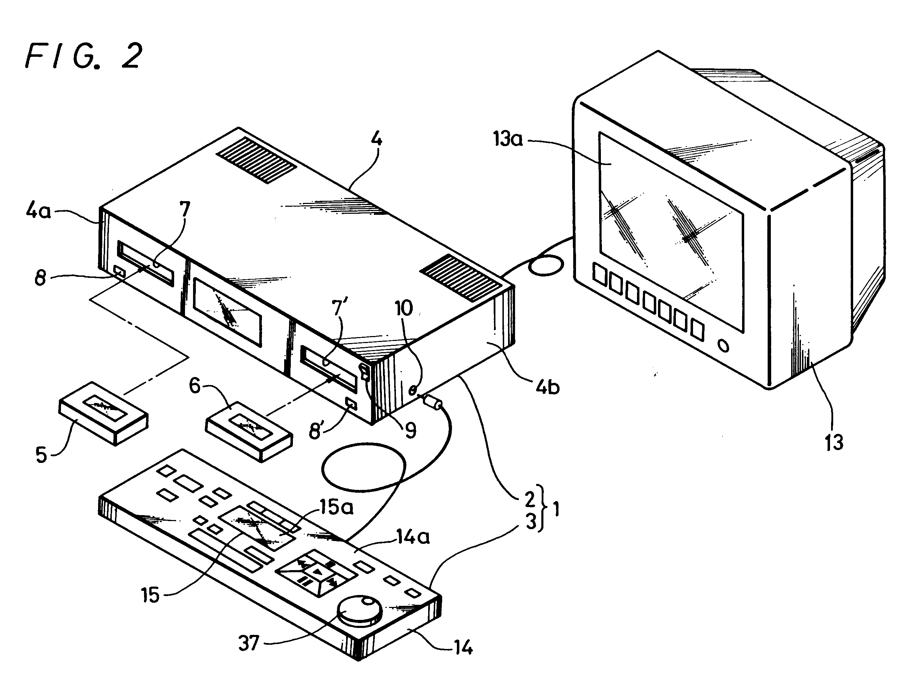

Referring now to Figure 2, there is illustrated a perspective view of video editing apparatus in accordance with a preferred embodiment of the present invention. Apparatus 1 comprises a main unit 2 and a keyboard 3. The main unit 2 includes a housing 4 having a video playback unit and a video recording unit therein. It will be understood from the following description that the video playback unit may include the capability of both recording and reproducing video signals, but to carry out the video editing operation described herein, only the video reproducing capability is of interest. Consequently, this unit will be referred to simply as a video playback unit. The video recording unit included within the housing 4 may be able both to record and reproduce video signals but, for simplicity, and to distinguish it from the video playback unit, it will be described simply as a video recording unit.

The housing 4 includes openings 7 and 7′ therein for receiving video tape cassettes 5 and 6, respectively, so as to load the video cassettes into the video playback and recording units, respectively. Although the openings 7 and 7′ are illustrated as being disposed in a front wall 4a of the housing 4, such openings may be disposed in other suitable locations, as may be desired. It will be appreciated that the video tape cassettes are both loaded and ejected via these openings. To accomplish the latter operation, eject buttons 8 and 8′ are illustrated for ejecting the video tape cassettes 5 and 6 from the video playback and recording units, respectively.

The housing 4 is also provided with a power switch 9 for supplying the terminating power to the video playback and recording units and other circuitry included within the housing 4, as will be described. In addition, a terminal or socket 10 is provided on, for example, a side wall 4b of the housing 4, this socket being arranged to receive a plug coupled to the keyboard 3. Signals generated by the keyboard 3 are thus supplied to the main unit 2 for controlling an editing operation, as will be described.

The rear wall of the housing 4 is provided with various connections and terminals (not shown), including a terminal for supplying video signals to a monitor 13. The monitor 13 includes a display screen 13a and is arranged to display video pictures reproduced from the video tape cassettes 5 and 6, as will be described. For the purpose of the present discussion, it is assumed that the video tape cassette 5 constitutes an original tape from which video signals are played back by the video playback unit. Consistent with this assumption, the video tape cassette 6 is designated the edit tape on which are recorded video signals transferred thereto from the original tape 5 by the cooperation of the video playback and recording units. Video signals recorded on the edit tape 6 also are reproduced by the reproducing circuitry included in the video recording unit, and these reproduced signals are displayed as a suitable picture on the display screen 13a.

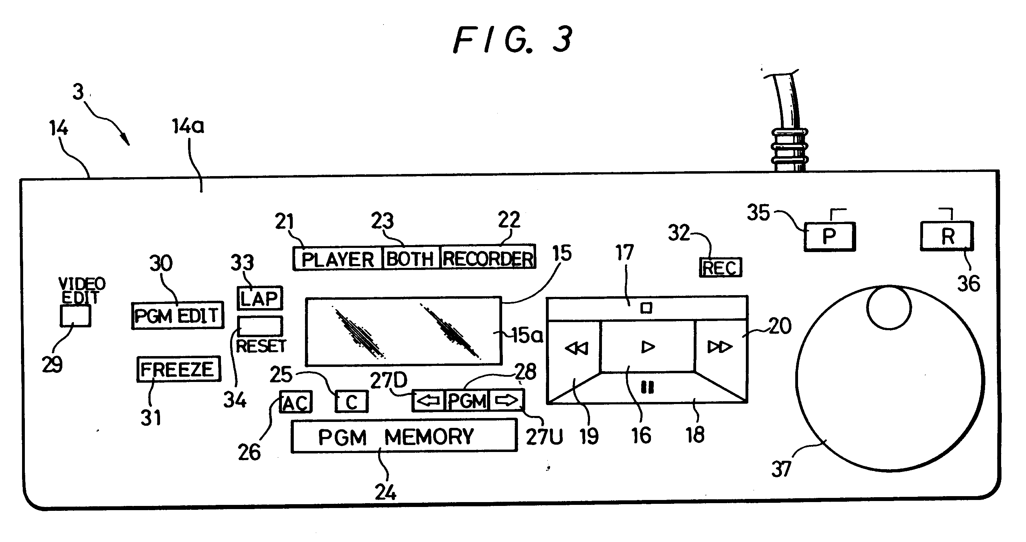

The keyboard 3, which is shown in greater detail in Figure 3, comprises a housing 14 having a top wall 14a on which the disposed various keyboard switches or pushbuttons 16 to 36 and a jog dial 37. An alphanumeric display 15 is also provided on the top wall 14a, and this alphanumeric display is preferably a liquid crystal display (LCD) device having a display screen 15a.

The function of the respective keyboard switches or pushbuttons 16 to 36 will now be described in conjunction with the plan view thereof of Figure 3. The pushbuttons 16 to 20 are arranged, when operated, to establish a respective operating mode of the video playback unit or the video recording unit, whichever unit is selected (as will be described). The pushbutton 16 is the play button for initiating playback of video signals from the video playback unit or from the video recording unit. Additionally, if the video recording unit is disposed in its recording mode, the operation of the play pushbutton 16 initiates the recording operation. The pushbutton 17 is the stop button which, when operated, stops the operation of the video playback and/or recording unit. The pushbutton 18 is the pause button which, when operated, interrupts or temporarily stops whatever operation is being carried out by the video playback and/or video recording unit. The pushbuttons 19 and 20 are rewind and fast-forward buttons which effect a high speed tape search operation, whereby the tape in either of the video cassettes 5 or 6 is moved in the reverse or forward direction at a relatively high speed. This so-called high speed search operation is carried out when the operator wishes to access a desired location on the video tape.

The pushbuttons 21 to 23 constitute selector buttons for selecting the video playback unit or the video recording unit, or both units, to be controlled in response to the operation of the pushbuttons 16 to 20. The pushbutton 21, when operated, selects the video playback unit to be controlled in response to the pushbuttons 16 to 20. For the purpose of the present discussion, it is recognised that, when the video playback unit is selected, previously recorded video signals may be reproduced but additional video signals are not recorded on the video tape used with that unit. The actuation of the pushbutton 22 selects the video recording unit for operation under the control of the pushbuttons 16 to 20. It is appreciated that video signals may be recorded or reproduced on the video tape used with the video recording unit. Finally, the actuation of the pushbutton 23 selects both the video playback unit and the video recording unit to be controlled in response to the pushbuttons 16 to 20. For example, if both units are selected for operation and if the pushbutton 16 is actuated, video signals are reproduced by the video playback unit and these video signals are transferred to and recorded by the video recording unit.

The programme memory pushbutton 24, when operated, enters into a memory various tape locations on, for example, the original tape being played by the video playback unit. Each time the programme memory pushbutton 24 is actuated, a tape location indication, such as a time code, a tape count or the like, representing the location of the video tape then being reproduced by the video playback unit, is entered into the memory. Typically, an operator would actuate the programme memory pushbutton 24 to store start and stop locations of the original tape, thus designating those segments thereon to be transferred to the edit tape. The start location on the edit tape may also be stored in the memory.

The pushbutton 25 is operable as a clear button which, when actuated, clears from the memory the immediately preceding tape location identification (time code) that had been stored therein in response to the operation of the programme memory pushbutton 24. An all-clear pushbutton 26 clears from the memory all tape location identifications that had been entered therein. Thus, when the pushbutton 26 is actuated, the identification of all segments on the original tape which had been programmed into the memory are deleted. The pushbuttons 27u and 27d are identified as order-designating buttons and, when actuated, modify the sequential order of those segments on the original tape whose locations have been stored in the memory. Thus, notwithstanding the order in which those segments are stored, operation of the order-designating pushbuttons facilitates a modification in that order such that the operator may vary the sequence in which such segments are reproduced from the original tape and transferred to the edit tape. The pushbutton 28 acts as a programme input button and, when operated, enters into the memory the modified order of segment reproduction preliminarily established by operatoractuation of the order-designating pushbuttons 27u and 27d. For example, each time the programme memory pushbutton 24 is actuated, the tape location identification, or time code, is displayed on the LCD display screen 15a. Once all of these time codes are displayed as start and stop codes, thus identifying the segments to be reproduced from the original tape, the operator may actuate the order-designating pushbuttons 27u and 27d to vary the displayed order in which these segments will be played back. When the operator determines that the displayed playback order is acceptable, the programme input pushbutton 28 is operated to "fix" this order in the memory.

A video exit pushbutton 29, when actuated, begins a video transfer operation from the original tape to the edit tape. Typically, both the video playback unit and the video recording unit are disposed in their pause modes, with the original tape positioned at the beginning of the segment to be transferred and with the edit tape positioned at the location to begin receiving the transferred video signals. When the video edit pushbutton 29 is actuated, the video playback and recording units commence operation to transfer the video signals from the original tape to the edit tape.

A programme edit pushbutton 30, when actuated, initiates the transfer of all segments which have been programmed into the aforementioned memory by the operation of the programme memory pushbutton 24 and the programme input pushbutton 28, as aforesaid. The programme edit pushbutton 30 thus effects an automatic transfer of segments in the order selected by the operator.

A freeze pushbutton 31, when actuated, records on the edit tape a still picture derived from video signals on the original tape. Typically, one frame of the still picture is recorded repetitively on the edit tape such that, during later playback of the edit tape, a still picture may be displayed therefrom without stopping or pausing the edit tape. A running-edit pushbutton 32 (located in the right half section of the keyboard 3) serves to record on the edit tape the video signals reproduced from the original tape at the time the pushbutton is operated. For example, a video picture derived from the original tape may be observed on the monitor 13 by the operator; when a desired video picture is displayed, he may operate the running-edit pushbutton 32 to transfer the video signals reproduced thereafter from the original tape.

A lap pushbutton 33 is operable to display on, for example, the LCD device 15, the total time duration of those segments which have been selected for editing. As one example, prior to an edit operation, once segments have been selected by operator actuation of the programme memory pushbutton 24 and the programme input pushbutton 28, the operation of the lap pushbutton 33 effects a display of the total time duration of all of these selected segments. As another example, the operation of the lap pushbutton 33 results in the display of the total amount of time of these segments which have already been transferred from the original tape to the edit tape.

A reset pushbutton 34 is operable, when actuated, to reset the lap count or time displayed by the LCD device 15 when the lap pushbutton 33 is actuated. The reset pushbutton 34 thus acts in a manner analogous to a counter reset button.

Picture switching pushbuttons 35 and 36 are operable to reverse the video content of the main and sub-pictures. For example, when the pushbutton 35 is actuated, the video signals reproduced from the original tape are used to display the main picture and the video signals reproduced from the edit tape are used to display the sub-picture insert therein. When the pushbutton 36 is actuated, the main picture is derived from the video signals reproduced from the edit tape and the sub-picture insert is derived from the video signals reproduced from the original tape. The operator may thus use these pushbuttons 35 and 36 to observe the details of video information reproduced from the original tape or from the edit tape, thus enabling the operator to better determine which segment is to be transferred to the desired location.

The jog dial 37 is manually operable to advance either the original tape or the edit tape incrementally in the forward or reverse direction so as to display a corresponding video picture on a frame-by-frame basis. The direction and speed of tape advance and thus picture advance is determined by the direction and magnitude of rotation of the jog dial 37.

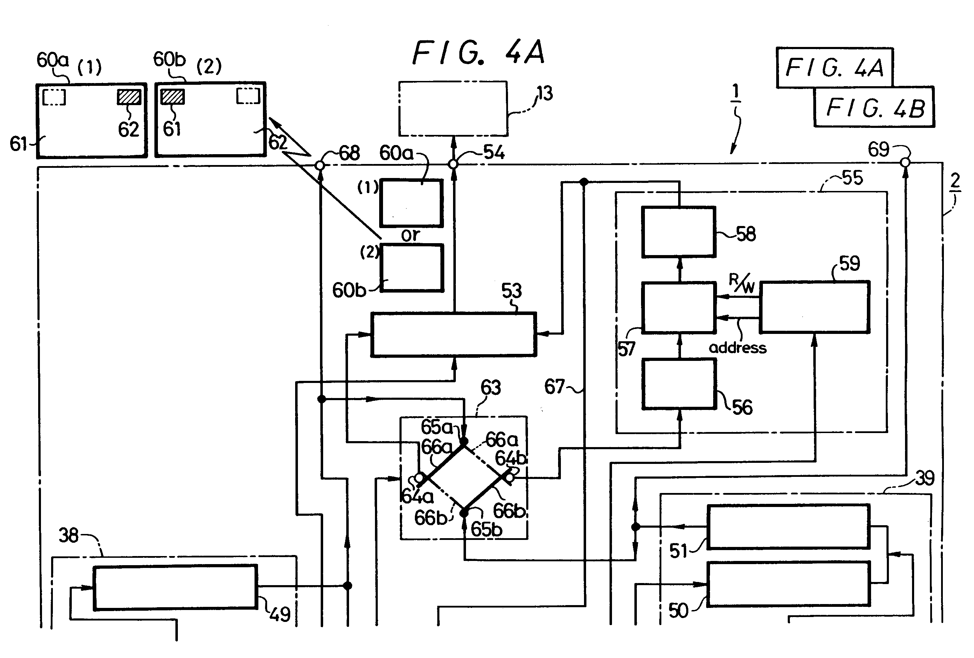

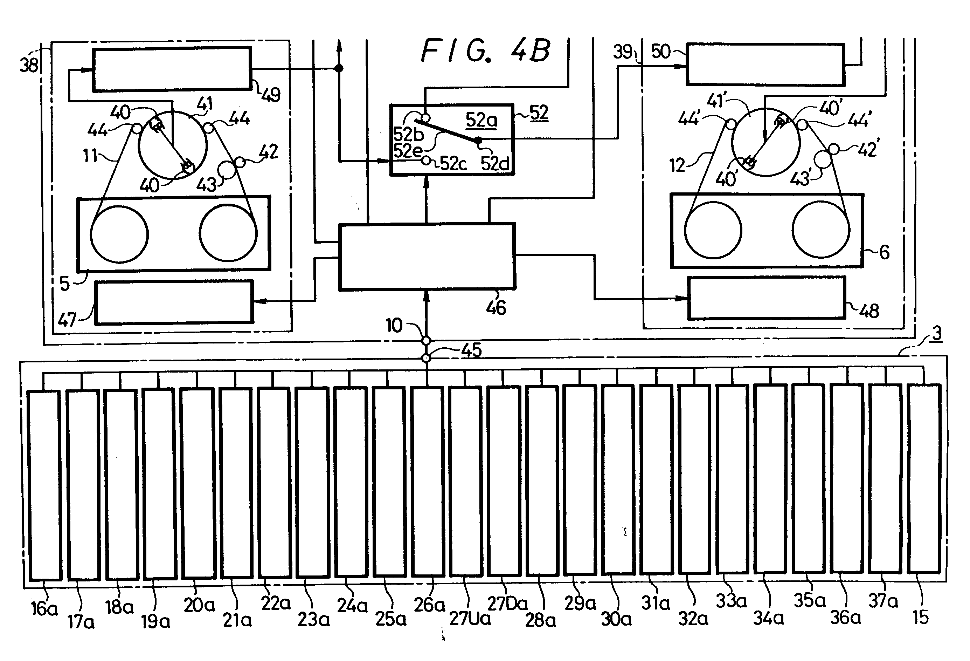

Referring now to Figures 4A and 4B, there is illustrated a block diagram of the video editing apparatus, and particularly the dual video recording/reproducing apparatus according to the preferred embodiment of the present invention. Like reference numerals are used in Figures 4A and 4B to identify those elements which have been discussed above. Figure 4B particularly represents the respective pushbuttons included in the keyboard 3 as switch elements, each identified with the suffix "a" used with the corresponding reference numeral shown in Figure 3. The jog dial 37 is illustrated as a simple switch element 37a, and the LCD device 15 is depicted simply as a rectangle. The block diagram shown in both Figures 4A and 4B includes a video playback unit 38, a video recording unit 39, a system controller 46, a selector switch 52, a mixer or combining circuit 53, a sub-picture signal former 55 and a supply circuit 63. The video playback unit 38 and the video recording unit 39 are similar in that each may receive a respective one of the video cassettes 5 and 6 for reproducing and/or recording signals therefrom and/or thereon. Those elements included in the video playback and recording units 38, 39 which are similar are identified by the same reference numerals and, to distinguish one from the other, the reference numerals used in conjunction with the video recording unit 39 are primed. Thus, rotary magnetic heads 40 or 40′ are supported on a drum 41 or 41′ to scan successive oblique tracks across the video tape deployed about the drum by tape loading posts 44 or 44′. To distinguish between the original and edit tapes, Figure 4B illustrates the original tape as a tape 11 and the edit tape as a tape 12. A capstan 42 or 42′ cooperates with a pinch roller 43 or 43′ to transport the tape 11 or 12 between reels within the video cassette, as is conventional. The manner in which the video tape is loaded and transported, and the manner in which video signals are recorded and reproduced are conventional, and no further description is provided herein.

The operation of the video playback unit 38 is controlled by a player controller 47 included therein, this player controller receiving control signals from the system controller 46. A reproducing circuit 49 is coupled to the magnetic heads 40 of the video playback unit 38 and operates to reproduce the video signals played back from the original tape 11. The reproducing circuit 49 is coupled to the selector switch 52, the combining circuit 53 and the supply circuit 63. In addition, the video signals reproduced by the reproducing circuit 49 are coupled to an output terminal or tap 68 to enable those video signals to be supplied to further apparatus (not shown) if desired.

In a similar manner, the video recording unit 39 includes a recorder controller 48 which is operable to control the recording/reproducing operation of the recording unit in a known manner. The recorder controller 48 responds to control signals supplied thereto by the system controller 46.

The video recording unit 39 includes a recording circuit 50 and a reproducing circuit 51, both coupled to the magnetic heads 40′ for the purpose of recording and reproducing signals, respectively, on the edit tape 12. The recording circuit 50 includes an input coupled to the selector switch 52 and an output coupled to the magnetic heads 40′. The reproducing circuit 51 includes an input coupled to the magnetic heads 40′ and an output coupled to the sub-picture signal former supply circuit 63 and to an output tap 69.

The sub-picture signal former 55 is operable to produce video signals to be displayed on a monitor, such as the monitor 13, as a picture-in-picture insert on a main picture. These sub-picture video signals are thus capable of producing a sub-picture of reduced size and of a particular position relative to the main picture. In one embodiment thereof, the sub-picture signal former 55 includes an analog-to-digital (A/D) converter 56, a memory 57, a digital-to-analog (D/A) converter 58 and a memory controller 59. The A/D converter 56 digitises analog video signals supplied thereto, such as by sampling each horizontal line interval of the video signals and converting each sample to a multi-bit digital signal. The A/D converter 56 is coupled to the memory 57 which, under the control of the memory controller 59, writes the digitised video signals supplied thereto into particular addresses determined by the memory controller 59. To reduce the size of the sub-picture derived from the sub-picture signal former 55, the memory controller 59 is arranged to control the memory 57 such that only selected digitised samples are written into the memory 57. For example, every nth sample in every mth line may be written into the memory 57. Alternatively, every sample in each line may be stored in the memory 57, but the memory controller 59 may control the reading out of the stored samples such that every nth sample in every mth line is read. it is to be appreciated that the memory controller 59 determines not only the addresses of the memory 57 into and from which digitised samples are stored, but also controls the memory 57 to carry out a read or write operation. Those samples read from the memory 57 are supplied to the D/A converter 58 in which they are reconverted back to analog form.

The A/D converter 56 includes an input coupled to the supply circuit 63 for receiving video signals from the supply circuit. The D/A converter 58 includes an output coupled to the combining circuit 53 and also the selector switch 52, for a purpose which will be described. The memory controller 59 is coupled to the system controller 46 and operates under the control of the system controller 46 to determine the addresses into which digitised samples are written and from which digitised samples are read. The system controller 46 also controls the memory controller 59 to select a memory read or memory write operation.

The combining circuit 53 is coupled to the system controller 46 and is operable to respond to respective signals either to combine a main picture signal supplied thereto by the supply circuit 63 with a sub-picture signal supplied by the sub-picture signal former 55 to produce a display signal, or simply to produce a display signal directly from the main picture signal supplied thereto. The output of the combining circuit 53 is coupled to a video output terminal 54 which, as illustrated, is connected to the monitor 13 for the purpose of displaying the display signal produced by the combining circuit 53. Thus, either a main picture will be displayed, or a picture-in-picture comprising a sub-picture insert into the main picture will be displayed, depending upon the control signal supplied from the system controller 46 to the combining circuit 53. As will be described below, the main picture signal may be derived from the reproducing circuit 49 or from the reproducing circuit 51, whereas the sub-picture signal is derived solely from the sub-picture signal former 55. However, as will also be described, the sub-picture signal may be derived from the video signals produced by the reproducing circuit 49 or those produced by the reproducing circuit 51. The supply circuit 63 determines the particular circuits to which the signals reproduced from the original tape and those reproduced from the edit tape are supplied.

For simplicity, the supply circuit 63 is illustrated as a dual change-over switch having inputs 65a and 65b, outputs 64a and 64b, and movable selectors 66a and 66b. In one condition, the selector 66a of the change-over switch connects the input terminal 65a with the output terminal 64a, while the selector 66b connects the input terminal 65b to the output terminal 64b. In the other condition of the dual change-over switch, the selector 66a couples the input terminal 65a to the output terminal 64b while the selector 66b couples the input terminal 65b to the output terminal 64a. The input terminal 65a is coupled to the reproducing circuit 49, and the input terminal 65b is coupled to the reproducing circuit 51. The output terminal 64a is coupled to the combining circuit 53 to supply the main picture signal thereto and the output terminal 64b is coupled to the A/D converter of the sub-picture signal former 55. The supply circuit 63 is coupled to the system controller 46 and the condition of the dual change-over switch is determined by a control signal supplied from the system controller 46 to the supply circuit 63. It is to be recognised that, in the second-mentioned condition of the change-over switch, the video signals reproduced by the reproducing circuit 49 are coupled to the sub-picture signal former 55 and the video signals reproduced by the reproducing circuit 51 are supplied as the main picture signals to the combining circuit 53.

The selector switch 52 is illustrated as a simple switch having an output 52d coupled to the recording circuit 50 of the recording unit 39. The selector switch 52 is also illustrated as including a fixed terminal 52b coupled to the output of the D/A converter 58 of the sub-picture signal former 55, and another fixed terminal 52c coupled to the output of the reproducing circuit 49 of the video playback unit 38. A selector 52e is used to couple the output terminal 52d to either of the input terminals 52b and 52c. The system controller 46 is coupled to the selector switch 52 and is operable to supply a control signal to determine which input terminal is coupled to the output terminal 52d.

When the selector switch 52 is controlled by the system controller 46 such that the input terminal 52b is coupled to the output terminal 52d, the contents of the memory 57, after being converted to analog form, are recorded on the edit tape 12. This is referred to herein as a still picture edit operation. Typically, the memory 57 stores a frame of video signals which, in the usual operation, is a frame reproduced from the original tape by the reproducing circuit 49 of the video playback unit 38. Such still picture editing operation is selected by operator-actuation of the freeze pushbutton 31 (Figure 3).

In the still picture edit operation, the frame reproduced from the original tape 11 is stored in the memory 57 and then read therefrom under the control of the memory controller 59, converted to analog form by the D/A converter 58 and supplied to the recording circuit 50 of the video recording unit 39 by the selector switch 52. The stored frame is read repeatedly and recorded in successive tracks on the edit tape 12 by the recording circuit 50 and the magnetic heads 40′. Thus, the same frame is recorded successively along a length of the edit tape 12 until, for example, the freeze pushbutton 31 is operated once again or until some other action is taken by the operator to terminate this still picture edit operation.

When the system controller 46 supplies a suitable "standard" edit control signal to the selector switch 52, the input terminal 52c is coupled to the output terminal 52d, thereby connecting the output of the reproducing circuit 49 to the input of the recording circuit 50. It is seen that in this "standard" edit mode, those video signals which are reproduced from the original tape are transferred to and recorded on the edit tape. Accordingly, the selector switch 52 is controlled by the system controller 46 in response to the operation of the keyboard 3 to establish either a "standard" or still picture edit mode of operation.

As mentioned above, the sub-picture signal former 55 is operable to produce sub-picture signals for the purpose of superimposing a sub-picture insert on the main picture displayed by the monitor 13. That the sub-picture insert is reduced in size relative to the main picture has been discussed above, and one technique for reducing the size of the sub-picture insert has been mentioned. In accordance with an advantageous feature of this embodiment, the location of the sub-picture insert may be controlled such that the operator, upon visual observation of the picture displayed on the monitor 13, is made aware whether the sub-picture is derived from the original tape or from the edit tape. Depending upon when the contents of the memory 57 are read therefrom relative to the scanning of the original or edit tape during a signal reproducing mode, the position of the sub-picture insert is established. For example, if the memory controller 59 reads the contents of the memory 57 at a time that is only slightly delayed from scanning the beginning of a frame picked up from the video tape, the sub-picture insert is displayed at the upper left portion of the main picture, such as that depicted by a sub-picture insert 61 in a main picture 62 of a display 60b. Conversely, if the memory controller 59 reads out the contents of the memory 57 at a time that is substantially delayed relative to scanning the beginning of a frame picked up from the video tape, the sub-picture insert is displayed at the upper right portion of the main picture. This is illustrated in a display 60a wherein a sub-picture insert 62 is positioned at the upper right portion of a main picture 61. Preferably, the display 60a is provided when the video signals derived from the original tape are displayed as the main picture. Thus, when the sub-picture is positioned at the right side of the display, the original tape is used to produce the main picture, and, conversely, when the sub-picture is located at the left side of the display, the edit tape is used to produce the main picture. The operator can thus discern which video tape is used to produce which picture. In the absence of confusion, the editing operation is facilitated.

The operation of the video editing apparatus illustrated in Figures 4A and 4B will now be described. Initially, let it be assumed that a manual edit operation is carried out. That is, video information reproduced from the original tape 11 by the video playback unit 38 is transferred for recording on the edit tape 12 by the video recording unit 39 when the operator observes information which he desires to transfer. First, the pushbutton 22 (Figure 3) is actuated to condition the video recording unit 39 for operation. The edit tape 12 may be transported for a video signal playback operation when the pushbutton 16 is actuated. Alternatively, the pushbutton 19 or the pushbutton 20 may be actuated to carry out a high-speed search of the edit tape. Still further, the jog dial 37 may be operated to advance the edit tape on a frame-by-frame basis.

In response to the actuation of the pushbutton 22, the supply circuit 63 is changed over such that the input terminal 65a is connected to the output terminal 64b, and the input terminal 65b is connected to the output terminal 64a. It will be appreciated that the system controller 46 responds to the actuation of the pushbutton 22 to supply a suitable control signal to the supply circuit 63 to condition it to this configuration. In this state, video signals picked up from the edit tape 12 by the reproducing circuit 51 of the video recording unit 39 are supplied as the main picture signals to the combining circuit 53 for display on the monitor 13. The operator may thus observe the information content of the edit tape 12 now being played back.

At this time, the video playback unit 38 is not conditioned to carry out a playback operation and, thus, video signals are not supplied from the reproducing circuit 49 to the supply circuit 63. Hence, the monitor 13 displays only the main picture derived from the edit tape 12 and no sub-picture is inserted or superimposed on to the main picture. Although the input terminal 65a is now connected to the output terminal 64b of the supply circuit 63, no video signals are coupled to this output terminal because none are supplied to the input terminal.

When the operator observes on the monitor 13 a picture derived from the edit tape 12 suitable for the insertion of video information from the original tape 11, the pause pushbutton 18 (Figure 3) is actuated. The video recording unit 39 is thus disposed in its pause or quiescent mode. If, while the video recording unit 39 is in its pause mode, the picture switching pushbutton is actuated, the source of the main and sub-pictures is reversed. That is, the system controller 46 responds to the actuation of the pushbutton 35 to change over the supply circuit 63 such that the input terminal 65a is connected to the output terminal 64a, and the input terminal 65b is connected to the output terminal 64b. This would produce the main picture in response to video signals played back from the original tape 11. However, in accordance with the example described herein, no signals are played back at this time from the original tape 11.

Nevertheless, assuming that the pushbutton 35 is operated to change over the supply circuit 63, as aforesaid, if the operator now actuates the pushbutton 21, the system controller 46 supplies a control signal to the player controller 47 of the video playback unit 38 to condition the reproducing circuit 49 to recover video signals played back from the original tape 11. The original tape 11 may be transported for a signal playback operation by actuating the pushbutton switch 16. Alternatively, the original tape 11 may be scanned by actuating the pushbutton switches 19 or 20. As yet a further alternative, the original tape 11 may be advanced on a frame-by-frame basis by operating the jog dial 37. In any event, the video signals now reproduced from the original tape 11 are supplied to the input terminal 65a of the supply circuit 63 and coupled from the output terminal 64a of the supply circuit 63 to the combining circuit 53. These video signals constitute the main picture signals, and the main picture reproduced from the original tape 11 is displayed on the monitor 13. The operator may now observe the video information reproduced from the original tape 11 until a desired starting point for the editing operation is reached. At that time, the operation of the pause button 18 disposes the video playback unit 38 in its pause mode.

At this time, both the video playback and video recording units 38, 39 are in their respective pause modes. If the operator wishes to confirm that the starting point on the edit tape 12 for receiving transferred video information is satisfactory, he may actuate the pushbutton switch 36 which changes over the condition of the supply circuit 63. Then, if the jog dial 37 is operated, the edit tape 12 is moved incrementally, on a frame-by-frame basis, and video signals are reproduced from the edit tape 12 by the reproducing circuit 51 and supplied as the main picture signals to the combining circuit 53 by the supply circuit 63. The user may thus observe the video content of the edit tape 12, frame-by-frame.

Now, assuming that the original tape 11 and the edit tape 12 are disposed at their desired locations for adding the video information now played back from the original tape on to the edit tape 12, the video edit button 29 is actuated. The system controller 46 responds to the actuation of this pushbutton to control the player controller 47 and the recorder controller 48 such that the video signals now reproduced from the original tape 11 by the reproducing circuit 49 are coupled through the selector switch 52 to the recording circuit 50 of the video recording unit 39 and recorded thereby on the edit tape 12. This transfer operation continues until the operator terminates this edit operation, such as by actuating the stop pushbutton 17.

The foregoing operation may be repeated, as desired. Thus, the original tape 11 and the edit tape 12 are first positioned at their respective locations suitable for transferring video signals from the original tape 11 to the edit tape 12. Although the foregoing has described the positioning of the edit tape 12 prior to the positioning of the original tape 11, it will be appreciated that this operation may be interchanged. In any event, the operator observes on the monitor 13, as the main picture, the video information reproduced from the original tape 11 or that reproduced from the edit tape 12 simply by actuating one or the other of the pushbuttons 35 and 36. Hence, the desired locations at which editing should begin are easily determined.

The manner in which a programmed edit operation is carried out will now be described. As before, the location on the edit tape 12 to which video information is to be transferred from the original tape 11 is first found, as was discussed above. Once this location is observed, the video recording unit 39 is disposed in its pause mode, such as by operating the pause pushbutton 18.

Thereafter, those segments on the original tape 11 which should be transferred to the edit tape 12 are located and identified. When the beginning of a desired segment recorded on the original tape 11 is reached, the pause pushbutton 18 may be operated and the programme memory pushbutton 24 is actuated. In the preferred embodiment wherein time codes are recorded on the original tape 11, the operation of the programme memory pushbutton 24 serves to write the time code identifying the starting location of this segment into a suitable memory (not necessarily the memory 57) and to display it on the LCD device 15.

The operator then resumes a playback operation for the video playback unit 38, such as by actuating the pause pushbutton 18 once again, whereupon the selected segment on the original tape 11 is played back and displayed. When the end point of this segment is reached, the pause pushbutton 18 is actuated once more, thereby disposing the video playback unit 38 in its pause mode. The operator next actuates the programme memory pushbutton 24 to write the time code identifying this end point into the memory and to display it on the LCD device 15.

The foregoing operation may be repeated several times, thereby writing into the memory the start and stop points of each segment desired to be transferred from the original tape 11 to the edit tape 12. If the operator wishes to delete a segment or change its start and stop location from the memory, the clear pushbutton 25 or the all-clear pushbutton 26 may be actuated. As mentioned above, the last-entered time code is deleted from the memory when the pushbutton 25 is operated. All time codes that had been written into the memory are deleted when the pushbutton 26 is actuated. Furthermore, should the operator wish to vary the order in which the selected segments are transferred from the original tape 11 to the edit tape 12, the order-designating pushbuttons 27u and 27d are operated.

Once the operator is satisfied with the segments selected for re-recording on to the edit tape 12, the programme edit pushbutton 30 is actuated to initiate the transfer of those segments from the original tape 11 to the edit tape 12. Thus, the video playback unit 38 operates the tape transport mechanism to search the original tape 11 until the time code identifying the start location of the first segment to be transferred is found. The tapes 11 and 12 are then advanced at their normal playback and recording speeds, respectively, and signals reproduced from the original tape 11 are supplied from the reproducing circuit 49 to the recording circuit 50 of the video recording unit 39 via the selector switch 52 for recording on the edit tape 12. When the time code identifying the stop location of the segment being recorded is reached, this transfer operation terminates and the player controller 47 now controls the transport mechanism in the video playback unit 38 to search the original tape 11 for the next segment to be transferred. In this manner, the original tape 11 is searched for segments which had been selected previously for transfer to the edit tape 12, and when each segment is reached in the desired order of transfer, video signals are reproduced from the original tape 11 and transferred to and recorded on the edit tape 12.

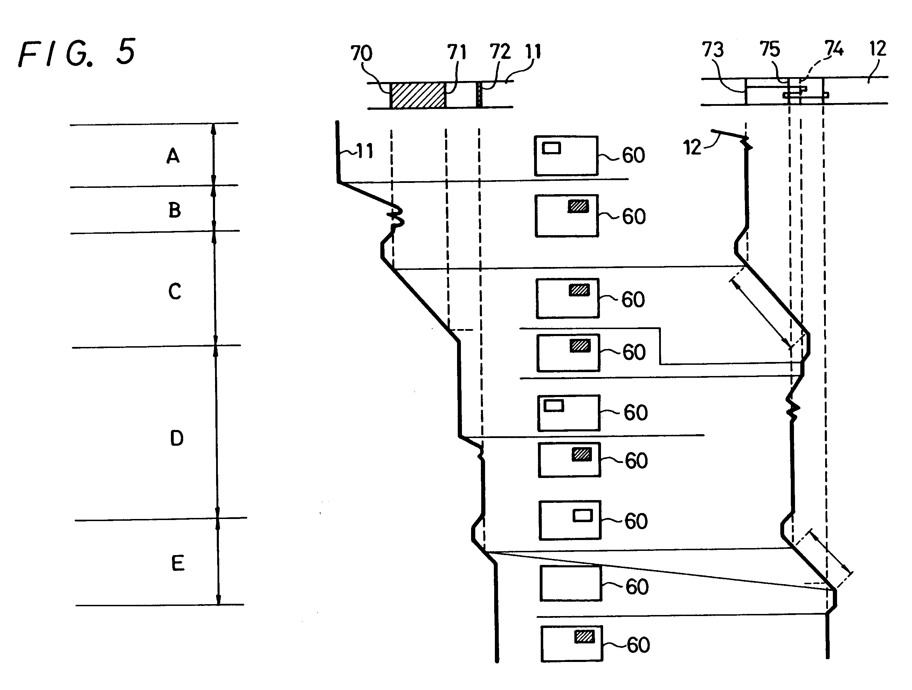

The manner in which a typical editing operation is carried out over time can best be appreciated by referring to the timing diagram illustrated in Figure 5. The progress of time is represented by the vertical direction shown in Figure 5, and the movement of the original and edit tapes 11, 12 is represented by the horizontal direction. For the purpose of this discussion, it is assumed that a so-called "moving" picture is reproduced from the original tape 11 and transferred to the edit tape 12, followed by the reproduction and transfer of a "still" picture. The segment of the moving picture to be transferred begins at a starting point 70 and ends at an end point 71, and the segment or single frame of the still pixture on the original tape 11 is identified by the reference numeral 72. The moving picture segment is transferred to and recorded on the edit tape 12 at a starting point 73, and the still picture is recorded on the edit tape beginning at a starting point 75.

Let is be assumed that the time codes identifying the starting point 70 and the end point 71 had been written into the memory by operation of the programme memory pushbutton 24, as aforesaid. Let it be further assumed that the time code identifying starting point 73 on the edit tape 12 has also been stored. Now, when the programme edit pushbutton 30 is actuated, the edit tape 12 is first advanced until the time code identifying starting point 73 is located. It is expected that the edit tape 12, when stopped, will overshoot the starting point 73, such as may be due to inertia of the tape transport mechanism. Accordingly, the recorder controller 48 of the video recording unit 39 gradually decreases the rotation of the capstan 42′ so as to slow the tape gradually. Furthermore, the capstan 42′ and the remaining tape transport mechanism is controlled to move the edit tape 12 back and forth until the starting point 73 is located precisely. At this location the recording heads 40′ scan the tape 12 at the very beginning of a record track. The tape 12 is now properly positioned to begin the recording of a segment to be transferred thereto from the original tape 11.

While the edit tape 12 is positioned, as aforesaid, the original tape 11 remains stationary. This positioning of the tape 12 while holding the tape 11 still is represented by an interval A in Figure 5. Now, the original tape 11 is advanced to locate the starting point 70, and while the tape 11 is moved, the tape 12 remains stopped.

The player controller 47 controls the tape transport mechanism of the video playback unit 38 in much the same way as the recorder controller 48 controls the tape transport mechanism of the video recording unit 39. Hence, the operation of the capstan 42 is controlled so as to gradually slow the tape 11 until the starting point 70 is reached. Because of expected overshoot, the tape 11 thereafter is moved forwards and backwards until the starting point 70 is located precisely. At that time, the playback heads 40 are brought into contact with the tape 11 at the beginning of a record track at the starting point 70. This control over the tape 11 is represented by an interval B.

Now that the tape 11 is positioned precisely at the starting point 70 and the tape 12 is positioned precisely at the starting point 73, the tape transport mechanisms in the video playback unit 38 and in the video recording unit 39 operate concurrently to transfer the design segment from the original tape 11 to the edit tape 12. This is carried out by first rewinding the original and edit tapes by a predetermined amount. Then, after "pre-rolling" the tapes, they are advanced simultaneously in the forward direction. The amount of pre-roll is selected to bring both tapes up to stable operating speed before video signals are transferred. Once the tapes 11 and 12 resume their forward movements, the starting point 70 on the tape 11 and the starting point 73 on the tape 12 are reached simultaneously. At that time, the video signals reproduced from the original tape 11 are transferred by the selector switch 52 to the recording circuit 50 and are recorded on the edit tape 12. This transfer of the selected segment continues until the end point 71 on the tape 11 is reached. At that time, the end point 74 on the tape 12 is reached. The transfer operation then terminates and video signals are no longer recorded on the edit tape 12. This transfer operation is represented by an interval C.

Let it be assumed that the still picture located at the starting point 72 on the original tape 11 is to be recorded at the starting point 75 on the edit tape 12. Let is be further assumed that the starting point 75 lies between the starting point 73 and the end point 74 of the segment just transferred to the edit tape 12. Accordingly, in anticipation of recording on the edit tape 12 the still picture segment to be reproduced from the original tape 11, the video playback unit 38 is stopped while the video recording unit 39 operates to rewind the tape 12 from the end point 74 to the point 75. Once the starting point 75 is reached, including the back and forth movement of the tape 12 to precisely position the tape at this starting point, the edit tape 12 is stopped and the original tape 11 is advanced to the starting point 72, the location at which is recorded the frame constituting the still picture. Here too, the tape 11 is transported back and forth about the starting point 72 so as to locate the tape precisely at that point. At this time, the original tape 11 is positioned precisely at the starting point 72 and the edit tape 12 is positioned precisely at the starting point 75, as represented by an interval D. The edit apparatus is now conditioned to carry out this next transfer operation.

As was described above in connection with the preceding transfer of video signals, the tapes 11 and 12 are pre-rolled concurrently from their starting positions 72 and 75, and then the tapes are advanced simultaneously to ensure that, when the starting points 72 and 75 are reached once again, both tapes are at their proper, stable operating speeds.

For the operation wherein a still picture is to be transferred to the edit tape 12, the freeze pushbutton 31 is actuated to change over the supply circuit 63 such that the input terminal 65a is connected to the output terminal 64b. Thus, when the original tape 11 is advanced to the starting point 72, the video signals in the frame of the still picture are reproduced by the reproducing circuit 49 and supplied by the supply circuit 63 to the sub-picture signal former 55. In particular, the video signals included in this frame are digitised and written into the memory 57. Preferably, during this still picture edit operation, each digitised sample in each line is read from the memory, converted to analog form by the D/A converter 58 and supplied by the selector switch 52 to the recording circuit 50 of the video recording unit 39. Hence, the re-converted video signals are recorded on the edit tape 12, commencing at the starting point 75. It is to be appreciated that, in accordance with the present example, a single frame of video signals is stored in the memory 57, but this frame is read from the memory repeatedly for recording in several successive tracks on the edit tape 12. Since the same frame is recorded successively on the edit tape 12, a still picture is reproduced when this portion of the edit tape is subsequently played back. This repetitive recording of the same frame on the edit tape 12 is carried out during an interval E.

In Figure 5, various video displays 60 are represented, each display corresponding to a particular main picture and sub-picture insert during the aforementioned operations. For example, during the interval A, the display 60 presents a main picture derived from the edit tape 12. During the interval B, the main picture of the display 60 is derived from the original tape 11 and a sub-picture insert derived from the edit tape 12 is also displayed. During the interval C, the main picture is derived from the video signals played back from the original tape 11. During the first portion of the interval D, the display 60 presents the main picture derived from the original tape 11 and a sub-picture insert derived from the edit tape 12. During the second portion of the interval D, the main picture is derived from the edit tape 12 and the sub-picture insert is derived from the original tape 11. That the sub-picture insert is derived from the original tape 11 will be appreciated from the representation that the sub-picture insert is located in the same relative position of the main picture as the video playback unit 38 is located relative to the main unit 2 (Figure 2).

Continuing with the displays 60, the main picture displayed during the third portion of the interval D is derived from the original tape 11 and the sub-picture insert is derived from the edit tape 12. During the first portion of the interval E when both tapes are pre-rolled, the main picture is derived from the original tape 11 and the sub-picture is derived from the edit tape 12. Then, when the still picture is recorded on the edit tape 12, the main picture is derived from the frame stored in the memory 57. Thereafter, if both tapes are disposed in their pause modes, the main picture of the display 60 is derived from the original tape 11 and the sub-picture insert is derived from the edit tape 12.

It will be readily apparent to those of ordinary skill in the art that various changes and modifications may be made to the above-described embodiment. As described herein, the video editing system can facilitate the location of desired segments of video information to be transferred from an original tape to an edit tape. The desired location on the edit tape to which the transferred segment is to be inserted likewise is easily discerned by providing a composite display of a main picture and a sub-picture on a single monitor. The sources of the main and sub-picture signals are easily controllable and interchangeable to permit an operator to verify the segment to be transferred from the original tape and the location on the edit tape to which the transferred segment is inserted. The location in the displayed main picture at which the sub-picture is inserted corresponds to the side of the housing 4 at which the source of the sub-picture insert is located. For example, the sub-picture insert is located at the left side of the main picture when the original tape 11 provides the source of the sub-picture signals. Conversely, the sub-picture insert is located at the right side of the displayed main picture when the edit tape 12 provides the source of the sub-picture signals. It will be recognised that other locations may be used to discriminate the source of the displayed sub-picture insert, such as upper and lower insert locations or diagonally opposite insert locations, depending upon whether the original tape or the edit tape constitutes the source of the sub-picture.

As has also been described herein, the combining circuit 53 is controllable so as to inhibit sub-picture signals supplied thereto from the sub-picture signal former 55 from being inserted into the main picture displayed on the monitor 13. The system controller 46 may respond to the operation of the keyboard 3 to carry out such inhibit operations.

By mixing the main and sub-picture signals to a single display signal, a standard television monitor can be used with the present arrangement. Stated otherwise, it is not necessary to connect an expensive, dual-picture video display device to the main unit 2 in order to display the main picture and the sub-picture insert.

Also, although the keyboard 3 is desirably physically independent of the main unit 2 and is connected thereto by a plug and socket arrangement, the keyboard may instead be an integral part of the main unit. Also, although as described a single jog dial is used to advance either the original tape or the edit tape on a frame-by-frame basis, separate jog dials may be provided, one for each tape. As yet another alternative, the video playback unit 38 and the video recorlding unit 39 may be separate, physically independent recording devices. Suitable connecting cables may be used to couple these separate recording devices to the system controller 46, the selector switch 52, the combining circuit 53, the sub-picture signal former 55 and the supply circuit 63. These latter circuits may be disposed in a common housing, such as the housing 4, with the separate video recorders disposed externally of that housing. Still further, although the video playback unit 38 has been described herein simply as a video signal reproducing device, it is appreciated that this unit may be a video recorder/reproducer, although only the reproducing circuitry included therein is of interest in the present context.

## Claims

1. Dual video recording/reproducing apparatus comprising:
a video playback unit (38);
a video recording unit (39) including recording means (50) for recording a video signal and reproducing means (51) for reproducing a video signal;
supply means (52) for supplying an output video signal from said video playback unit (38) to the recording means (50) of said video recording unit (39);
sub-picture signal forming means (55) responsive to a video signal supplied thereto for providing a sub-picture signal operable to cause the display of a sub-picture insert of a main picture displayed on a video display (13);
switch means (63) for receiving a video signal from said video playback unit (38) and a video signal from the reproducing means (51) of said video recording unit (39) and selectively operative to couple one of said video signals to said sub-picture signal forming means (55) and to couple the other of said video signals as a main picture signal;
combining means (53) for combining said sub-picture and main picture signals to form a display signal for displaying a main picture and a sub-picture insert;
control means (46) for controlling the operation of said switch means (63); and
a housing (4) for containing the sub-picture signal forming means (55), the switch means (63), the combining means (58) and the control means (46).

2. Apparatus according to claim 1, wherein said sub-picture signal forming means (55) comprises an analog-to-digital converter (56) for receiving a video signal, memory means (57) for storing digital signals produced by said analog-to-digital converter (56), a digital-to-analog converter (58) coupled to said memory means (57) for receiving digital signals read therefrom, and memory control means (59) for controlling at least the reading of digital signals from said memory means (57).

3. Apparatus according to claim 2, wherein said memory control means (59) is operative to control the time at which digital signals are read from said memory means (57) thereby determining the location in said main picture at which the sub-picture is inserted.

4. Apparatus according to claim 3, wherein said memory control means (59) is operative to control the writing of a selected portion of digital signals from said analog-to-digital converter (56) to said memory means (57) to reduce the size of the sub-picture relative to said main picture.

5. Apparatus according to claim 2, claim 3 or claim 4, wherein said switch means (63) includes first means (64b, 65b) for selectively coupling the video signal from the reproducing means (51) of said video recording unit (39) to said analog-to-digital converter (56), the output of said digital-to-analog converter (58) being supplied as said sub-picture signal to said combining means (53), and said switch means (63) includes second means (64a, 65a) for selectively coupling the video signal from said video playback unit (38) to said combining means (53) as said main picture signal.

6. Apparatus according to any one of claims 2 to 5, wherein said switch means (63) includes first means (64b, 65a) for selectively coupling the video signal from the video playback unit (38) to said analog-to-digital converter (56), the output of said digital-to-analog converter (58) being supplied as said sub-picture signal to said combining means (53), and said switch means (63) includes second means (64a, 65b) for selectively coupling the video signal from said reproducing means (51) of the video recording unit (39) to said combining means (53) as said main picture signal.

7. Apparatus according to claim 5 or claim 6, wherein said video playback unit (38) is disposed at a first side in said housing (4) and said video recording unit (39) is disposed at an opposite side in said housing (4), and wherein said memory control means (59) is operative to read the digital signals from said memory means (57) at a time relative to the main picture signal such that the sub-picture is inserted in the main picture at a location corresponding to the side in said housing (4) at which the video recording unit (39) is disposed.

8. Apparatus according to any one of claims 2 to 7, wherein said memory means (57) is operable to store a frame of digitised video signals produced by said analog-to-digital converter (56), and wherein said supply means (52) comprises selecting means (52a) coupled to said video playback unit (38) and to said digital-to-analog converter (58) for selecting the output video signal from said video playback unit (38) or a frame of analog video signals produced by said digital-to-analog converter (58) to be supplied to the recording means (50) of said video recording unit (39), whereby a still picture signal is recorded when the frame of analog video signals is selected.

9. Apparatus according to any one of the preceding claims, comprising system control means (46) coupled to said combining means (53) for inhibiting the sub-picture signals from being combined to form said display signal, whereby only a main picture is displayed from said display signal.

10. Apparatus according to any one of the preceding claims, comprising a keyboard (3) having a control key (35, 36) operative to supply a control signal to said control means (46) and thereby determine which video signal is coupled by said switch means (63) as said main picture signal and which video signal is coupled to said sub-picture signal forming means (55).

11. Apparatus according to claim 10, wherein said keyboard (3) is physically separate from and not included in said housing (4).

## Patentansprüche

1. Duales Video-Aufnahme/Wiedergabegerät, bestehend aus
einer Video-Abspieleinheit (38),
einer Video-Aufzeichnungseinheit (39) mit einer Aufzeichnungseinrichtung (50) zum Aufzeichnen eines Videosignals und einer Wiedergabeeinrichtung (51) zur Wiedergabe eines Videosignals,
einer Zuführungseinrichtung (52) zum Zuführen eines Videoausgangssignals von der Video-Abspieleinheit (38) zu der Aufzeichnungseinrichtung (50) der Video-Aufzeichnungseinheit (39),
einer auf ein ihr zugeführtes Videosignal ansprechenden Unterbildsignalgeneratoreinrichtung (55) zur Bereitstellung eines Unterbildes, die so betreibbar ist, daß sie die Anzeige eines Unterbildes als Einfügung in ein auf einer Videoanzeigevorrichtung (13) wiedergebenes Hauptbild bewirkt,
Schaltmitteln (63) zum Empfangen eines Videosignals von der Video-Abspieleinheit (38) und eines Videosignals von der Wiedergabeeinrichtung (51) der Video-Aufzeichnungseinheit (39) und zum selektiven Durchschalten eines dieser Videosignale zu der Unterbildsignalgeneratoreinrichtung (55) und zum Durchschalten des anderen Videosignals als Hauptbildsignal,
einer Kombinationseinrichtung (53) zum Kombinieren des Unterbildsignals und des Hauptbildsignals zur Bildung eines Anzeigesignals für die Anzeige eines Hauptbildes und eines eingefügten Unterbildes,
einer Steuereinrichtung (46) zur Steuerung der genannten Schaltmittel (63)
und einem Gehäuse (4) zur Aufnahme der Unterbildsignalgeneratoreinrichtung (55), der Schaltmittel (63), der Kombinationseinrichtung (53) und der Steuereinrichtung (46).

2. Gerät nach Anspruch 1, bei dem die Unterbildsignalgeneratoreinrichtung (55) einen Analog/Digitalwandler (56) zur Aufnahme eines Videosignals aufweist, ferner eine Speichereinrichtung (57) zum Speichern von in dem Analog/Digitalwandler (56) erzeugten Digitalsignalen, einen mit der Speichereinrichtung (57) verbundenen Digital/Analogwandler (58) zur Aufnahme der aus dieser ausgelesenen Digitalsignale sowie eine Speichersteuereinrichtung (59) zum Steuern zumindest des Auslesens von Digitalsignalen aus der Speichereinrichtung (57).

3. Gerät nach Anspruch 2, bei dem die Speichersteuereinrichtung (59) die Zeitlage steuert, mit der Digitalsignale aus der Speichereinrichtung (57) ausgelesen werden, und damit die Stelle bestimmt, an der das Unterbild eigefügt wird.

4. Gerät nach Anspruch 3, bei dem die Speichersteuereinrichtung (59) das Einschreiben eines ausgewählten Abschnitts von Digitalsignalen aus dem Analog/Digitalwandler (56) in die Speichereinrichtung (57) steuert, um die Größe des Unterbildes relativ zu dem Hauptbild zu reduzieren.

5. Gerät nach Anspruch 2, 3 oder 4, bei dem die Schaltmittel (63) erste Mittel (64b, 65b) umfassen, die das Videosignal aus der Wiedergabeeinrichtung (51) der Video-Aufzeichnungseinheit (39) selektiv zu dem Analog/Digitalwandler (56) durchschalten, wobei das Ausgangssignal des Digital/Analogwandlers (58) der Kombinationseinrichtung (53) als das genannte Unterbildsignal zugeführt wird, und bei dem die Schaltmittel (63) ferner zweite Mittel (64a, 65a) umfassen, die das Videosignal aus der Video-Abspieleinheit (38) als das genannte Hauptbild selektiv zu der Kombinationseinrichtung (53) durchschalten.

6. Gerät nach einem der Ansprüche 2 bis 5, bei dem die Schaltmittel (63) erste Mittel (64b, 65a) umfassen, die das Videosignal aus der Video-Abspieleinheit (38) selektiv zu dem Analog/Digitalwandler (56) durchschalten, wobei das Ausgangssignal des Digital/Analogwandlers (58) der Kombinationseintichtung (53) als das genannte Unterbildsignal zugeführt wird, und bei dem die Schaltmittel (63) ferner zweite Mittel (64a, 65b) umfassen, die das Videosignal aus der Wiedergabeeinrichtung (51) als das genannte Hauptbild selektiv zu der Kombinationseinrichtung (53) durchschalten.

7. Gerät nach Anspruch 5 oder 6, bei dem die Video-Abspieleinheit (38) auf einer ersten Seite des genannten Gehäuses (4) und die Video-Aufzeichnungseinheit (39) auf der entgegengesetzten Seite des Gehäuses (4) angeordnet sind und bei dem die Speichersteuereinrichtung (59) die Digitalsignale aus der Speichereinrichtung (57) in einer solchen Zeitlage relativ zu dem Hauptbildsignal ausliest, daß das Unterbild an einer Stelle in das Hauptbild eingefügt wird, die der Seite in dem Gehäuse (4) entspricht, an der die Video-Aufzeichnungseinheit (39) angeordnet ist.

8. Gerät nach einem der Ansprüche 2 bis 7, bei dem die Speichereinrichtung (57) einen Rahmen der von dem Analog/Digitalwandler (56) erzeugten Digitalsignale speichert und bei dem die Zuführungseinrichtung (52) eine mit der Video-Abspieleinheit (38) und dem Digital/Analogwandler (58) verbundene Auswahleinrichtung (52a) aufweist zur Auswahl entweder des Ausgangssignals der Video-Abspieleinheit (38) oder eines Rahmens der von dem Digital/Analogwandler (58) erzeugten analogen Videosignale für die Zuführung zu der Aufzeichnungseinrichtung (50) der Video-Aufzeichnungseinheit (39), wodurch ein Standbild aufgezeichnet wird, wenn der Rahmen analoger Videosignale ausgewählt wird.

9. Gerät nach einem der vorhergehenden Ansprüche mit einer mit der Kombinationseinrichtung (53) verbundenen Systemsteuereinrichtung (46), mittels derer die Kombination der Unterbildsignale zur Bildung des Anzeigesignals verhinderbar ist, so daß aus dem Anzeigesignal nur ein Hauptbild angezeigt wird.

10. Gerät nach einem der vorhergehenden Ansprüche mit einer Tastatur (3) mit einer Steuertaste (35, 36), mittels derer der Systemsteuereinrichtung (46) ein Steuersignal zuführbar und dadurch festlegbar ist, welches Videosignal von den genannten Schaltmittel (63) als Hauptbildsignal durchgeschaltet und welches Videosignal zu der Unterbildsignalgeneratoreinrichtung (55) durchgeschaltet wird.

11. Gerät nach Anspruch 10, bei dem die Tastatur (3) physikalisch von dem Gehäuse (4) getrennt und nicht in diesem enthalten ist.

## Revendications

1. Appareil double d'enregistrement/reproduction de signaux vidéo comprenant :
une unité de lecture vidéo (38);
une unité d'enregistrement vidéo (39) incluant un moyen d'enregistrement (50) pour enregistrer un signal vidéo et un moyen de reproduction (51) pour reproduire un signal vidéo ;
un moyen d'application (52) pour appliquer un signal vidéo de sortie en provenance de ladite unité de lecture vidéo (38) au moyen d'enregistrement (50) de ladite unité d'enregistrement vidéo (39) ;
un moyen de formation de signal de sous-image (55) sensible à un signal vidéo qui lui est appliqué pour produire un signal de sous-image ayant pour action de provoquer l'affichage d'une insertion de sous-image dans une image principale affichée sur un affichage vidéo (13) ;
un moyen de commutateur (63) pour recevoir un signal vidéo en provenance de ladite unité de lecture vidéo (38) et un signal vidéo en provenance du moyen de reproduction (51) de ladite unité d'enregistrement vidéo (39) et pour coupler sélectivement l'un desdits signaux vidéo audit moyen de formation de signal de sous-image (55) et pour coupler l'autre desdits signaux vidéo en tant que signal d'image principale ;
un moyen de combinaison (53) pour combiner lesdits signaux de sous-image et d'image principale pour former un signal d'affichage pour afficher une image principale et une insertion de sous-image ;
un moyen de commande (46) pour commander le fonctionnement dudit moyen de commutateur (63) ; et
un boîtier (4) pour contenir le moyen de formation de signal de sous-image (55), le moyen de commutateur (63), le moyen de combinaison (58) et le moyen de commande (46).

2. Appareil selon la revendication 1, dans lequel ledit moyen de formation de signal de sous-image (55) comprend un convertisseur analogique/numérique (56) pour recevoir un signal vidéo, un moyen de mémoire (57) pour stocker des signaux numériques produits par ledit convertisseur analogique/numérique (56), un convertisseur numérique/analogique (58) coupé audit moyen de mémoire (57) pour recevoir des signaux numériques lus dans celui-ci et un moyen de commande de mémoire (59) pour commander au moins la lecture de signaux numériques dans ledit moyen de mémoire (57).

3. Appareil selon la revendication 2, dans lequel ledit moyen de commande de mémoire (59) fonctionne pour commander l'instant auquel des signaux numériques sont lus dans ledit moyen de mémoire (57) en déterminant ainsi l'emplacement dans ladite image principale auquel la sous-image est insérée.

4. Appareil selon la revendication 3, dans lequel ledit moyen de commande de mémoire (59) fonctionne pour commander l'écriture d'une partie sélectionnée de signaux numériques en provenance dudit convertisseur analogique/numérique (56) dans ledit moyen de mémoire (57) afin de réduire la dimension de la sous-image par rapport à ladite image principale.

5. Appareil selon la revendication 2, 3 ou 4, dans lequel ledit moyen de commutateur (63) inclut un premier moyen (64b, 65b) pour coupler sélectivement le signal vidéo en provenance du moyen de reproduction (51) de ladite unité d'enregistrement vidéo (39) audit convertisseur analogique/numérique (56), la sortie dudit convertisseur numérique/analogique (58) étant appliquée en tant que dit signal de sous-image audit moyen de combinaison (53), et ledit moyen de commutateur (63) inclut un second moyen (64a, 65a) pour coupler sélectivement le signal vidéo en provenance de ladite unité de lecture vidéo (38) audit moyen de combinaison (53) en tant que dit signal d'image principale.

6. Appareil selon l'une quelconque des revendications 2 à 5, dans lequel ledit moyen de commutateur (63) inclut un premier moyen (64b, 65a) pour couper sélectivement le signal vidéo en provenance de l'unité de lecture vidéo (38) audit convertisseur analogique/numérique (56), la sortie dudit convertisseur numérique/analogique (58) étant appliquée en tant que dit signal de sous-image audit moyen de combinaison (53), et ledit moyen de commutateur (63) inclut un second moyen (64a, 65b) pour coupler sélectivement le signal vidéo en provenance dudit moyen de reproduction (51) de l'unité d'enregistrement vidéo (39) audit moyen de combinaison (53) en tant que dit signal d'image principale.

7. Appareil selon la revendication 5 ou 6, dans lequel ladite unité de lecture vidéo (38) est disposée au niveau d'un premier côté dans ledit boîtier (4) et ladite unité d'enregistrement vidéo (39) est disposée au niveau d'un côté opposé dans ledit boîtier (4), et dans lequel ledit moyen de commande de mémoire (59) fonctionne pour lire les signaux numériques dans ledit moyen de mémoire (57) à un instant par rapport au signal d'image principale qui est tel que la sous-image soit insérée dans l'image principale en un emplacement correspondant au côté dans ledit boîtier (4) au niveau duquel l'unité d'enregistrement vidéo (39) est disposée.

8. Appareil selon l'une quelconque des revendications 2 à 7, dans lequel ledit moyen de mémoire (57) fonctionne pour stocker une trame de signaux vidéo numérisés produits au moyen dudit convertisseur analogique/numérique (56) et dans lequel ledit moyen d'application (52) comprend un moyen de sélection (52a) coupé à ladite unité de lecture vidéo (38) et audit convertisseur numérique/analogique (58) pour sélectionner le signal vidéo de sortie en provenance de ladite unité de lecture vidéo (38) ou une trame de signaux vidéo analogiques produits par ledit convertisseur numérique/analogique (58) en vue d'une application au moyen d'enregistrement (50) de ladite unité d'enregistrement vidéo (39) et ainsi, un signal d'image fixe est enregistré lorsque la trame de signaux vidéo analogiques est sélectionnée.

9. Appareil selon l'une quelconque des revendications précédentes, comprenant un moyen de commande de système (46) couplé audit moyen de combinaison (53) pour empêcher que les signaux de sous-image ne soient combinés pour former ledit signal d'affichage et ainsi, seulement une image principale est affichée à partir dudit signal d'affichage.

10. Appareil selon l'une quelconque des revendications précédentes , comprenant un clavier (3) comportant une touche de commande (35, 36) opérant pour appliquer un signal de commande audit moyen de commande (46) et pour ainsi déterminer quel signal vidéo est couplé par ledit moyen de commutateur (63) en tant que dit signal d'image principale et quel signal vidéo est couplé audit moyen de formation de signal de sous-image (55).

11. Appareil selon la revendication 10, dans lequel ledit clavier (3) est physiquement séparé dudit boîtier (4) et n'est pas inclus dans celui-ci.
